## Europäisches Patentamt
## European Patent Office
## Office européen des brevets

(19)

(11) **EP 0 593 322 B1**

(12) **FASCICULE DE BREVET EUROPEEN**

(45) Date de publication et mention
de la délivrance du brevet:
**10.06.1998 Bulletin 1998/24**

(51) Int Cl.⁶: **H02J 13/00**, H01H 9/54,
H01R 13/66

(21) Numéro de dépôt: **93402312.8**

(22) Date de dépôt: **21.09.1993**

(54) **Prise électrique intelligente**

Intelligente elektrische Steckdose

Intelligent electrical socket

(84) Etats contractants désignés:
**DE FR GB IT**

(30) Priorité: **23.09.1992 FR 9211338**

(43) Date de publication de la demande:
**20.04.1994 Bulletin 1994/16**

(73) Titulaire: **SGS-THOMSON MICROELECTRONICS**
**94253 Gentilly Cédex (FR)**

(72) Inventeur: **Le Van Suu, Maurice**
**F-93230 Romainville (FR)**

(74) Mandataire: **Michelet, Alain**
**Cabinet Harlé et Phélip**
**21 rue de la Rochefoucauld**
**75009 Paris (FR)**

(56) Documents cités:
EP-A- 0 229 268          DE-A- 3 608 910
GB-A- 2 060 964          GB-A- 2 197 568
US-A- 4 445 183          US-A- 4 500 934

**Description**

La présente invention concerne une prise électrique commandée à distance.

Le développement de la domotique nécessite la mise en oeuvre de prises électriques intelligentes, reliées à une centrale de commande pilotée à base de processeurs.

Ces prises électriques intelligentes sont placées sur le réseau général et leurs sorties, auxquelles peuvent être reliés les différents appareils domestiques, sont mises sous tension ou mises hors circuit selon les signaux de commande reçus.

De plus, ces prises fournissent en retour, à la centrale de commande, des informations sur l'exécution des commandes reçues et, plus généralement, sur le fonctionnement des appareils domestiques qu'elles alimentent.

Il est ainsi possible de commander à distance l'ensemble des équipements de la maison.

Des prises électriques intelligentes sont connues et peuvent être classées en deux catégories principales:

- d'une part, les prises comportant un interrupteur ou commutateur électromécanique,
- d'autre part, les prises comportant un interrupteur ou commutateur à semi-conducteur.....

Le document EP-A-0.229.268 décrit ainsi un récepteur de commande comprenant une prise de branchement à une unité de programmation et de test, et un interrupteur électromécanique. Le récepteur de commande comporte un élément d'exploitation recevant des signaux de commande et commandant l'interrupteur électromécanique.

Ce récepteur de commande a les inconvénients communément rencontrés dans des systèmes avec interrupteurs électromécanique, c'est-à-dire usure mécanique, réponse lente et apparition d'arcs électriques.

Il est proposé, dans le document US-A-4.445.183, un interrupteur électrique commandant l'application d'une tension de source à un chargement sous le contrôle d'un signal de commande. L'interrupteur électrique comprend des moyens d'interruption électromécanique en parallèle avec des moyens d'interruption à semi-conducteurs.

Le document GB-A-2.060.964 concerne un système de commande électronique à base de temps, comprenant une unité maîtresse qui commande des unités asservies pour des applications domestiques. La commande est effectuée via le circuit électrique du secteur et chaque unité asservie est préférentiellement logée dans une fiche électrique. Dans un exemple particulier de réalisation, chaque unité asservie comprend un commutateur du type triac, un circuit de commande et des circuits de démodulation et de décodage.

L'objectif de l'invention est une prise intelligente qui ne présente ni les inconvénients dus aux interrupteurs électromécaniques, ni ceux dus aux interrupteurs à semi-conducteurs, et qui puisse en particulier être logée dans un volume clos de faible dimension tout en ayant une usure limitée.

Un objectif supplémentaire de l'invention est une telle prise électrique intelligente commandable à une distance éloignée.

A cet effet, l'invention concerne une prise électrique intelligente commandée par un signal de commande et comportant un interrupteur à semi-conducteur et un processeur de signal commandé à distance. Le processeur de signal reçoit le signal de commande et commande l'interrupteur à semi-conducteur, le signal de commande du processeur de signal lui étant adressé au travers d'un circuit principal sur lequel est placée la prise électrique et parcouru par un courant alternatif.

Selon l'invention, la prise électrique intelligente comporte un interrupteur électromécanique connecté en parallèle sur l'interrupteur à semi-conducteur, le processeur de signal commandant l'interrupteur électromécanique. De plus, un modem connecté en parallèle sur le circuit principal reçoit le signal de commande et l'adresse au processeur de signal.

Différents modes de réalisation associent dans toutes leurs combinaisons techniquement possibles les caractéristiques suivantes:

Lors de la mise sous tension de ladite prise, l'interrupteur à semi-conducteur est d'abord fermé, puis l'interrupteur électromécanique est fermé. Inversement, à l'ouverture, l'interrupteur électromécanique est d'abord ouvert, puis l'interrupteur à semi-conducteur est ouvert.

Les interrupteurs étant inclus dans un commutateur, le processeur de signal analyse la forme d'onde de la tension du circuit principal, aux bornes du commutateur, et ferme ou ouvre l'interrupteur électromécanique à un instant où la valeur de ladite tension est faible.

L'interrupteur semi-conducteur peut être un triac, ou une association de thyristors, ou une association de composants du type Isolation Gate Bipolar Transistor.

L'interrupteur électromécanique peut être un relais à contacts de mercure.

Le processeur de signal est alimenté par le circuit principal au travers d'un régulateur basse tension.

Un mode de réalisation, non limitatif de l'invention, est décrit en référence aux dessins annexés, dans lesquels:

- la Figure 1 est un schéma de positionnement de la prise intelligente sur un circuit principal;
- la Figure 2 est un schéma faisant apparaître les différents éléments constitutifs de la prise intelligente ;
- la Figure 3 est un diagramme des temps représentant le fonctionnement de la prise intelligente lors de son ouverture et de sa fermeture ;
- la Figure 4 et la Figure 5 sont des représentations de la forme d'onde de la tension dans le courant principal et des instants de commutation de l'interrupteur électromécanique dans un mode de réalisation préféré.

La prise intelligente 1 est placée entre une charge 2 et un circuit principal de puissance 3.

De manière traditionnelle, lorsque la prise intelligente 1 est fermée, la charge 2 est sous tension, son alimentation est produite à partir du circuit principal ou circuit de puissance 3. Au contraire, lorsque l'interrupteur 1 est ouvert, la charge 2 est déconnectée du circuit principal 3. L'ouverture et la fermeture de la prise intelligente 1 sont avantageusement produites à distance, par exemple par un signal circulant dans le circuit de puissance 3 sur une porteuse et démodulé par le modem 4. Une commande locale peut également être prévue.

Un processeur de signal 11 faisant partie de la prise intelligente 1 reçoit le signal du modem 4 et commande l'ensemble d'interruption 12 interposé entre le circuit principal 3, auquel il est relié par les bornes 5 et 6 et la charge 2.

Le modem 4 est également connecté aux bornes 5 et 6, par lesquelles il reçoit le signal modulé provenant du circuit de puissance 3.

Le processeur de signal 11 peut également émettre un signal indiquant l'état ouvert ou fermé de la prise intelligente 1, ou encore indiquant l'exécution d'une commande. Il peut encore transmettre un signal provenant de l'appareil connecté à la prise et représentant sa nature ou son état.

Ce signal, émis par le processeur de signal, est adressé par le modem 4 au travers du circuit de puissance 3.

Une centrale de commande, reliée par un deuxième modem au circuit principal, dialogue avec le processeur de signal 11.

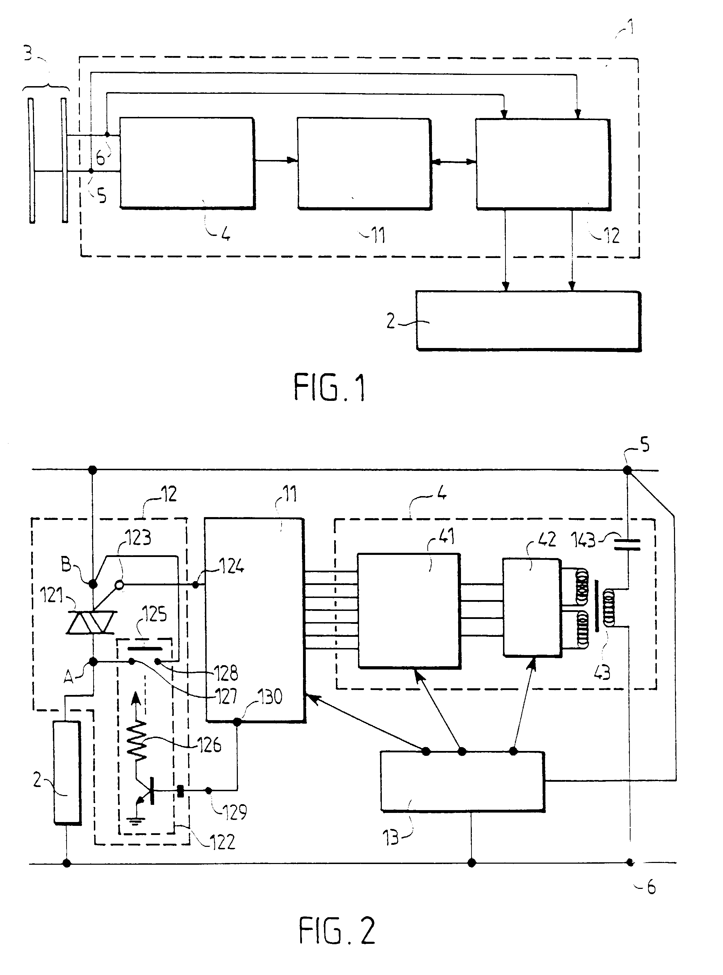

La prise intelligente 1 est décrite plus en détail sur la Figure 2 où l'on retrouve, avec les mêmes numérotations que sur la Figure 1, les bornes 5 et 6 du circuit principal, le modem 4, le processeur de signal 11, l'ensemble d'interruption 12 et la charge 2.

L'ensemble d'interruption 12 comporte un interrupteur à semi-conducteur 121 et un interrupteur électromécanique 122 reliés l'un et l'autre aux bornes A et B et donc connectés en parallèle.

L'interrupteur à semi-conducteur est avantageusement un triac, dont la gâchette 123 est reliée à un port 1, 124 du processeur de signal 11.

Cet interrupteur peut également être une association de thyristors, ou une association de composants du type Isolation Gate Bipolar Transistor.

L'interrupteur électromécanique 122 comporte un bobinage 126, dont la mise sous tension commande le déplacement du contact 125 qui est susceptible de relier les bornes 127 et 128.

Cet interrupteur électromécanique 122 peut également être bistable.

Dans ce cas, il comporte un noyau à aimant permanent et deux bobines. La commande de l'une ou l'autre de ces bobines détermine le sens de l'aimantation du noyau.

Ainsi, le maintien de l'état de l'interrupteur est conservé, même en cas de rupture de l'alimentation en courant.

La borne 129 de commande de l'interrupteur électromécanique est reliée au port 2, 130 du processeur de signal 11.

Le modem 4 comporte un processeur de signal 41, un amplificateur opérationnel 42 et un transformateur 43.

Le primaire du transformateur 43 est relié aux bornes 5 et 6 du circuit principal de courant, un condensateur 143 évitant la transmission des parasites.

Les secondaires du transformateur sont reliés à l'amplificateur opérationnel qui est lui-même relié au semi-conducteur 41, qui adresse ou reçoit les signaux du processeur de signal 11.

Une unité d'alimentation 13, reliée aux bornes 5 et 6, fournit la puissance nécessaire au fonctionnement du semi-conducteur 41, de l'amplificateur opérationnel 42 et du processeur de signal 11.

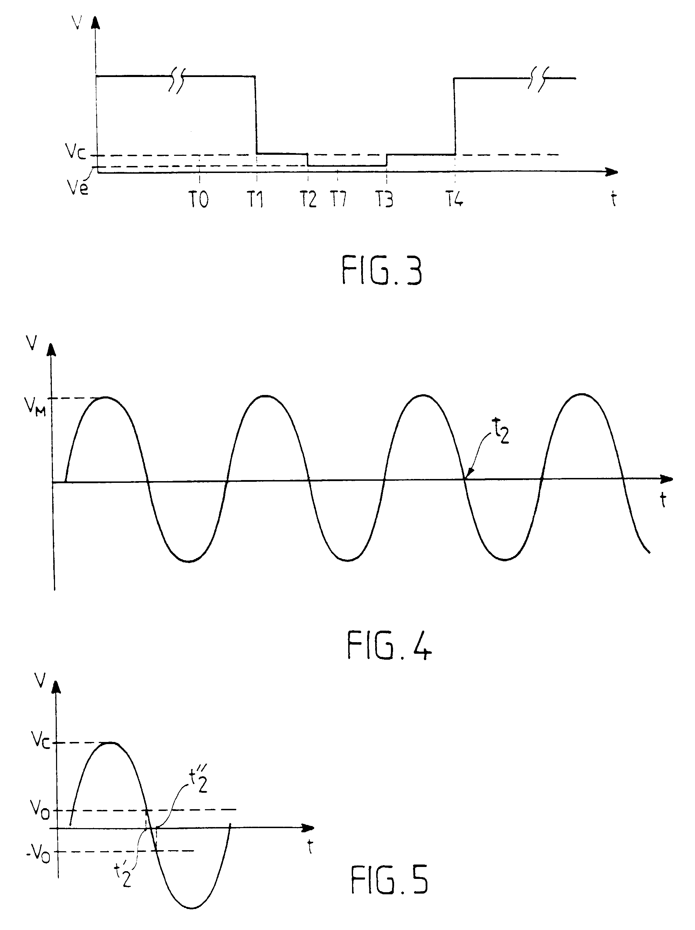

Le fonctionnement de la prise intelligente est maintenant décrit en référence à la Figure 3, dans laquelle est représentée en ordonnée la différence de potentiel $V = VB - VA$, présente aux bornes de l'ensemble d'interruption 12. Le temps est représenté en abcisse.

Au temps $T_o$, la prise intelligente est ouverte, la différence de potentiel V est donc maximum et correspond à la tension fournie par le circuit principal 3.

Le modem 4 reçoit à $T_o$ un signal de fermeture de la prise intelligente et le transmet au processeur de signal 11, celui-ci déclenche tout d'abord la fermeture du triac, qui est réalisée en $T_1$. La différence de potentiel $V_B - V_A$ diminue alors considérablement et est réduite à la tension de chute $V_C$ du triac.

Peu de temps après, le processeur de signal 11 commande la fermeture de l'interrupteur électromécanique 122.

La tension de chute $V_e$ de l'interrupteur électromécanique 122 étant beaucoup plus faible que la tension de chute $V_C$ de l'interrupteur à semi-conducteur 121, la différence de potentiel $V = V_B - V_A$ est alors réduite à la valeur $V_e$. Elle reste à cette valeur pendant toute la durée de la fermeture de la prise intelligente (situation à $T_7$).

L'ouverture de la prise intelligente est réalisée de manière symétrique à la réception de l'ordre de commande correspondant par le processeur de signal 11 via le modem 4.

A $T_7$, la prise intelligente est fermée, le processeur de signal commande tout d'abord l'ouverture de l'interrupteur électromécanique 122 en $T_3$, ce qui a pour effet de faire remonter la tension $V = V_B - V_A$ de sa valeur minimum $V_e$ à la valeur $V_C$ égale à la tension de chute de l'interrupteur à semi-conducteur 121.

Celui-ci est ensuite ouvert en $T_4$ ramenant la tension $V = V_B - V_A$ à sa valeur maximum.

On comprend ainsi l'avantage essentiel du dispositif : lors de son ouverture ou de sa fermeture, l'interrupteur électromécanique 122 n'est soumis à ses bornes A et B qu'à une différence de potentiel égale à la tension de chute $V_C$ de l'interrupteur à semi-conducteur. Cela permet donc l'utilisation d'un interrupteur électromécanique faiblement dimensionné et limite son usure.

Pour sa part, l'interrupteur à semi-conducteur 121 n'est traversé par le courant d'alimentation de la charge 2 que pendant les périodes de temps comprises entre $T_1$ et $T_2$ d'une part, et $T_3$ et $T_4$ d'autre part.

Les effets négatifs dus à son échauffement lors du passage d'un courant fort sont donc réduits et quasiment éliminés.

De préférence, $T_2$ et $T_1$ d'une part, $T_4$ et $T_3$ d'autre part ne sont séparés que par un très faible intervalle de temps, par exemple correspondant à quelques oscillations, lorsque la tension dans le circuit principal 3 est alternative.

Un mode de réalisation préféré, que nous décrirons en référence à la Figure 4, permet de diminuer encore les contraintes pesant sur l'interrupteur électromécanique 122.

Dans ce mode de réalisation, le processeur de signal 11 analyse la forme d'onde de la tension $V = V_B - V_A$ aux bornes de l'ensemble d'interruption 12.

Lorsque la tension du circuit principal est une tension sinusoïdale, la tension $V = V_B - V_A$ a la même forme et, dans les périodes de temps séparant $T_2$ et $T_1$ d'une part, $T_3$ et $T_4$ d'autre part, elle varie entre $+ V_C$ et $- V_C$.

Le processeur de signal 11 utilise le résultat de son analyse afin de déclencher l'ouverture et la fermeture de l'interrupteur à semi-conducteur 121 à des instants $T_2$ et $T_3$ voisins d'un instant de passage par zéro de la tension V. C'est-à-dire que le point $T_2$, par exemple, est positionné entre les instants $t'_2$ et $t''_2$ correspondant à des tensions $V_o$ et $- V_o$, de valeur absolue beaucoup plus faible que la tension maximum $V_C$ pouvant être présente entre les bornes A et B, lorsque l'interrupteur à semiconducteur 121 est fermé.

Ainsi, l'interrupteur électromécanique 122 ne change d'état que lorsque la tension à ses bornes a une valeur absolue au plus égale à $V_o$, c'est-à-dire très faible.

La prise intelligente de l'invention a un faible volume et son échauffement est faible. Elle est donc bien adaptée à l'encastrement dans les murs des habitations.

Cette invention peut être réalisée avec des composants de différentes origines.

De bons résultats ont été obtenus en utilisant un triac comme interrupteur semi-conducteur 121, en utilisant les composants commercialisés par la Société SGS-THOMSON (marque déposée) sous les références suivantes :

- pour le processeur de signal 11 : ST6, ST7, ST8 ou ST9,
- pour le modem 41 : ST7536 ou ST7537.

L'interrupteur électromécanique 122 est avantageusement un relais à contacts de mercure.

A titre d'exemple, l'invention peut être mise en oeuvre dans les conditions suivantes.

La tension V du circuit principal étant de 200 V à 50 ou 60 Hz, on a :

$$V_C = 1,2 \text{ V à } 1,7 \text{ V}$$

$$V_e \simeq 100 \text{ mV}$$

L'intervalle de temps entre $T_2$ et $T_1$ est égal à 100 à 200 μs.

L'intervalle de temps entre $T_3$ et $T_4$ est égal à 100 à 200 μs.

Les signes de référence, insérés après les caractéristiques techniques mentionnées dans les revendications, ont pour seul but de faciliter la compréhension de ces dernières, et n'en limitent aucunement la portée.

## Revendications

1. Prise électrique intelligente commandée par un signal de commande comportant un interrupteur à semi-conducteur (121) et un processeur de signal (11) commandé à distance, et agencé pour recevoir le signal de commande et commander l'interrupteur à semi-conducteur (121), le signal de commande du processeur de signal (11) lui étant adressé au travers d'un circuit principal (3) sur lequel est placée la prise électrique et parcouru par un courant alternatif,
caractérisée en ce qu'elle comporte un interrupteur électromécanique (122) connecté en parallèle sur l'interrupteur à semi-conducteur (121), le processeur de signal (11) étant agencé pour commander l'interrupteur électromécanique (122), et un modem (4) connecté en parallèle sur le circuit principal (3) et agencé pour recevoir le signal de commande et l'adresser au processeur de signal (11).

2. Prise électrique selon la revendication 1, caractérisée en ce que, lors de la mise sous tension de ladite prise, l'interrupteur à semi-conducteur (121) est d'abord fermé, puis l'interrupteur électromécanique (122) est fermé et que, inversement, à l'ouverture, l'interrupteur électromécanique (122) est d'abord ouvert, puis l'interrupteur à semi-conducteur (121) est ouvert.

3. Prise électrique selon l'une des revendications 1 ou 2, caractérisée en ce que lesdits interrupteurs (121, 122) étant inclus dans un commutateur (12), le processeur de signal (11) est agencé pour analyser la forme d'onde de la tension du circuit principal (3), aux bornes du commutateur, fermer ou ouvrir l'interrupteur électromécanique (122) à un instant où la valeur de ladite tension est faible.

4. Prise électrique selon l'une des revendications 1 à 3, caractérisée en ce que l'interrupteur à semi-conducteur est un triac.

5. Prise électrique selon l'une des revendications 1 à 4, caractérisée en ce que l'interrupteur électromécanique (122) est un relais à contacts de mercure.

6. Prise électrique selon l'une des revendications 1 à 5, caractérisée en ce que le processeur de signal (11) est alimenté par le circuit principal (3) au travers d'un régulateur basse tension.

**Patentansprüche**

1. Intelligente elektrische Steckdose, die durch ein Steuersignal gesteuert ist, mit einem Halbleiterschalter (121) und einem ferngesteuerten Signalprozessor (11), der derart betrieben ist, daß er das Steuersignal empfängt und den Halbleiterschalter (121) steuert, wobei das Steuersignal des Signalprozessors (11) diesem über eine Hauptschaltung (3) zugeleitet wird, auf welcher die elektrische Steckdose angeordnet ist und durch welche Wechselstrom fließt,
dadurch gekennzeichnet, daß
die Steckdose einen elektromechanischen Schalter (122), der mit dem Halbleiterschalter (121) parallelgeschaltet ist, daß der Signalprozessor (11) derart betrieben ist, daß er den elektromechanischen Schalter (122) steuert, und ein Modem (4) aufweist, das zur Hauptschaltung (3) parallelgeschaltet und derart betrieben ist, daß es das Steuersignal empfängt und an den Signalprozessor (11) weiterleitet.

2. Elektrische Steckdose nach Anspruch 1, dadurch gekennzeichnet, daß, wenn die Steckdose unter Spannung gesetzt ist, zunächst der Halbleiterschalter (121) und danach der elektromechanische Schalter (122) geschlossen wird, und daß umgekehrt beim Öffnen zunächst der elektromechanische Schalter (122) und anschließend der Halbleiterschalter (121) geöffnet wird.

3. Elektrische Steckdose nach einem der Ansprüche 1 oder 2, dadurch gekennzeichnet, daß die Schalter (121, 122) in einer Schalteinrichtung (12) vorgesehen sind, und daß der Signalprozessor (11) derart betrieben ist, daß er die Form der Spannungswelle der Hauptschaltung (3) an den Anschlüssen der Schalteinrichtung analysiert und den elektromechanischen Schalter (122) zu einem Zeitpunkt, zu dem der Wert der Spannung niedrig ist, schließt oder öffnet.

4. Elektrische Steckdose nach einem der Anschlüsse 1 bis 3, dadurch gekennzeichnet, daß der Halbleiterschalter ein Triac ist.

5. Elektrische Steckdose nach einem der Anschlüsse 1 bis 4, dadurch gekennzeichnet, daß der elektromechanische Schalter (122) ein Relais mit Quecksilberkontakten ist.

6. Elektrische Steckdose nach einem der Ansprüche 1 bis 5, dadurch gekennzeichnet, daß der Signalprozessor (11) von der Hauptschaltung (3) über einen Niederspannungsregler gespeist wird.

**Claims**

1. Intelligent electric socket controlled by a command signal comprising a semiconductor switch (121) and a remote controlled signal processor (11) and provided to receive the command signal and to control the semiconductor switch (121), the command siganl from the signal processor (11) being sent to it via a main circuit (3) on which is provided the electric socket and scanned by an alternative current characterized in that it comprises an electromechanical switch (122) connected in parallel across the semiconductor switch (121), the signal processor (11) being provided to control the electromechanical switch (122) and a modem (4) connected in parallel across the main circuit (3) and provided to receive the command signal and to send it to the signal processor (11).

2. Electric socket according to claim 1, characterized in that when power is applied to the said socket, first the semiconductor switch (121) closes followed by the electromechanical switch (122), and in that, inversely, on opening, first the electromechanical switch (122) opens followed by the semiconductor switch (121).

3. Electric socket according to one of claims 1 or 2, characterized in that said switch (121,122) being located in a power switch (12), the signal processor (11) is provided to analyse the wave form of the voltage in the main circuit (3) at the terminals of the power switch, to close or open the electromechanical switch (122) when the value of the said voltage is low.

4. Electric socket according to one of claims 1 to 3, characterized in that the semiconductor switch is a triac.

5. Electric socket according to one of claims 1 to 4, characterized in that the electromechanical switch (122) is a mercury-contact relay.

6. Electric socket according to one of claims 1 to 5, characterized in that the signal processor (11) is powered from the main circuit (3) via a low-voltage regulator.

FIG.1

FIG.2

FIG.3

FIG.4

FIG.5